# EUROPÄISCHE PATENTSCHRIFT

(11) **EP 1 673 979 B1**
(45) Veröffentlichungstag und Bekanntmachung des Hinweises auf die Patenterteilung: **04.06.2008**
(21) Anmeldenummer: 05027988.4
(22) Anmeldetag: 21.12.2005
(51) Int. Cl.: A23G 3/20

(54) **Verfahren und Vorrichtung zum Reinigen einer Überziehmaschine**
Process and device for cleaning an enrober
Procédé et dispositif pour nettoyer une machine à enrober

(30) Priorität: 23.12.2004 DE 102004062137
(43) Veröffentlichungstag der Anmeldung: 28.06.2006
(73) Patentinhaber: Sollich KG, 32105 Bad Salzuflen (DE)
(72) Erfinder: Sollich , Thomas, 32689 Kalletal (DE)
(74) Vertreter: Rehberg Hüppe + Partner

(56) Entgegenhaltungen:
- DE-A1- 3 710 539
- DE-A1- 19 848 766
- DE-C1- 4 243 814
- US-A1- 2004 099 286

## Beschreibung

### TECHNISCHES GEBIET DER ERFINDUNG

Die Erfindung bezieht sich auf ein Verfahren zum Reinigen einer Überziehmaschine mit heißem Wasser. Die Erfindung bezieht sich auch eine Vorrichtung zum Reinigen einer Überziehmaschine sowie auf eine reinigbare Überziehmaschine.

Eine solche Überziehmaschine dient dazu, insbesondere temperierte Schokolade und ähnlichen Massen auf Artikel auf dem Gitterband aufzubringen, wobei die Schokolade im Überschuss durch die Überziehmaschine fließt und dabei auch das Gitterband durchdringt sowie mit einer Vielzahl von Teilen der Überziehmaschine in Berührung kommt. Es handelt sich um eine Überziehmaschine, die eine Überziehstation aufweist, in der die flüssige Schokolade im freien Fall auf die Artikel gelangt. Die Überziehmaschine ist in der Regel auch mit einer Bodenüberziehstation ausgestattet. Sie weist ferner ein Gebläse zum Abblasen überschüssiger Schokolade von den Artikeln auf. Auch andere Massen als Schokolade, beispielsweise fetthaltige Massen, Überzugsmassen, Karamellmassen und dergleichen können mit einer solchen Überziehmaschine verarbeitet werden.

Bei einem Massewechsel in der Überziehmaschine, also wenn beispielsweise eine dunkle Schokolade zuvor verarbeitet worden ist und nachfolgend Artikel mit einer hellen Schokolade oder gar einer weißen Überzugsmasse behandelt werden sollen, entsteht das Problem, die zuvor verarbeitete Masse aus der Überziehmaschine zu entfernen und sämtliche Teile, die mit dieser Masse in Berührung gekommen sind, zu reinigen, damit dann die neue Masse eingegeben werden kann.

### STAND DER TECHNIK

Zur Durchführung eines solchen Massewechsels ist es bekannt, die Überziehmaschine mit der zuvor verarbeiteten Masse aufzuheizen und zu entleeren, wobei die zuvor verarbeitete Masse über eine Rückpumpe hinweggeführt wird. Nach dem Abpumpen der zuvor verarbeiteten Masse werden der Innenraum der Überziehmaschine und die dort angeordneten Aggregate, soweit zugänglich, mechanisch gereinigt, d. h. Massereste werden mit Werkzeugen, z. B. einem Spachtel, entfernt. Dieser Vorgang ist sehr zeitaufwendig und je nach Zugänglichkeit des Innenraums auch sehr mühsam. Außerdem ist damit die Überziehmaschine nur grob vorgereinigt, so dass sich ein zweiter Reinigungsschritt anschließen muss. Bei dieser zweiten Reinigung kommt entweder Wasser oder Kakaobutter zum Einsatz. Es ist bekannt, Überziehmaschinen unter Verwendung von Wasser zu reinigen. Hierzu wird bei stillstehender Überziehmaschine ein handelsüblicher Druckreiniger eingesetzt, durch dessen Lanze oder Düse heißes Wasser auf die Aggregate der Überziehmaschine gespritzt wird. Die an den Aggregaten haftenden Massereste werden durch den Druck des Wassers entfernt. Auch dieser Reinigungsschritt stellt praktisch ein mechanisches Verfahren dar und ist nur insoweit erfolgreich, als die Aggregate zugänglich sind. Das von dem Druckreiniger ausgespritzte Wasser ist zwar heiß, kühlt jedoch nach dem Verlassen der Düse relativ schnell ab und ist insgesamt nicht in der Lage, die Aggregate und Teile der Überziehmaschine nennenswert zu erwärmen. Schlecht zugängliche Stellen an der Überziehmaschine, beispielsweise die Unterseite von Wellen, Leisten oder dergleichen, werden nur unvollkommen erreicht und dementsprechend nicht hinreichend gereinigt. Durch das Aufspritzen von Wasser mit Druck tritt darüber hinaus eine Verteilung der abzunehmenden Masse auf andere Aggregate der Überziehmaschine und in unzugängliche Stellen hinein ein. Auch erfordert die Verwendung des Wassers einen nachgeschalteten Trocknungsvorgang. Weiterhin ist nachteilig, dass der Wasserverbrauch des Druckreinigers entsprechend hoch ist, da das aufgespritzte Wasser aus der Überziehmaschine abläuft und nicht wieder genutzt wird. Demzufolge muss unterhalb der Überziehmaschine ein Wasserablauf vorhanden sein. Die Verwendung eines Druckreinigers setzt voraus, dass diesem kontinuierlich aufgeheiztes Wasser zugeführt werden muss, so dass ein entsprechend hoher Energiebedarf unvermeidlich ist. Das Waschpersonal, welches diese Reinigung durchführt, muss durch eine entsprechende Kleidung und eine Schutzbrille vor dem Prallwasser geschützt werden. Diese Druckreinigung ist auch insofern nachteilig, als es z. B. die Lebensdauer von Lagern von Wellen und anderen Aggregaten verringert, da das Schmiermittel in den Lagern durch den Druckstrahl zumindest teilweise entfernt wird.

Um diesen Nachteilen der Druckreinigung mit Wasser entgegenzuwirken, ist es bekannt, eine Spülmasse, beispielsweise Kakaobutter oder eine andere Fettlösung, in die Überziehmaschine einzubringen. Die Überziehmaschine wird ohne Durchlauf von Artikeln in Gang gesetzt, so dass die Spülmasse fortlaufend umgewälzt und beispielsweise über eine Überziehstation umläuft. Dabei erreicht die Spülmasse auch einen großen Teil der mit der vorher verarbeiteten Masse verschmutzten Teile der Überziehmaschine und reinigt diese durch Aufschmelzen mehr oder weniger vollständig. Jedoch werden von der Spülmasse nicht alle Teile der Überziehmaschine erreicht, so dass die Reinigungswirkung nur unvollkommen ist. Die Spülmasse wird am Ende der Reinigung der Überziehmaschine von dieser abgezogen und beispielsweise in der normalen Schokoladeproduktion verarbeitet. Anschließend kann die neue Überzugsmasse eingefüllt werden. Es ist weiterhin bekannt, die wesentlichen Teile der Überziehmaschine aus Edelstahl auszubilden und an das Entleeren der Überziehmaschine mit der alten Masse eine Nassreinigung mit heißem Wasser unter Druck anzuschließen. Diese Nassreinigung ist in mehrerlei Hinsicht problematisch. Beim Aufbringen eines Sprühstrahls von heißem Wasser auf das Gitterband entsteht eine erhebliche Sprüh- und Verteilungswirkung, so dass die unterhalb des oberen Trums des Gitterbandes angeordneten Aggregate nur sehr unvollkommen erreicht werden. Durch das bei dieser Reinigung notwendigerweise in die Überziehmaschine eingeschleppte heiße Wasser entsteht eine Kontamination, indem günstige Bedingungen für das Wachstum von Bakterien geschaffen werden. Um dieser Gefahr entgegenzuwirken, ist es bekannt, dem Reinigungsvorgang mit heißem Wasser einen Trocknungsvorgang durch das Aufblasen von heißer Luft anzuschließen. Auch dabei werden die Einzelteile der Maschine aufgeheizt, und der Trocknungsvorgang wird über einen entsprechend langen Zeitraum durchgeführt. Dennoch werden von der Trocknung nicht alle Teile erfasst, und es besteht nicht die Möglichkeit zu kontrollieren, ob wirklich alle Teile, die vorher mit heißem Wasser benetzt wurden, auch trocken sind.

Für einen an einer Überziehmaschine durchzuführenden Massewechsel ist es auch bereits bekannt, das Gitterband quer zu seiner Laufrichtung aufzuschneiden und auf diese Art und Weise die Schleife des Gitterbandes zu öffnen, damit die unterhalb des oberen Trums des Gitterbands befindlichen Aggregate gut zugänglich gereinigt werden können. Bei dieser Reinigung müssen dann wieder Spülmassen benutzt werden, die z. B. entweder aus Kakaobutter oder wiederum aus Heißwasser bestehen können. Auch dabei ist die Reinigung entsprechend umständlich, aufwendig und unsicher. Insbesondere muss das durchtrennte Gitterband nach der Reinigung wieder zeitraubend zusammengeflochten werden.

Aus der DE 198 48 766 A1 ist ein Verfahren zum Reinigen einer Überziehmaschine sowie eine reinigbare Überziehmaschine bekannt. Die Überziehmaschine weist einen Rahmen, ein darin gelagertes und umlaufend antreibbares Gitterband zur Aufnahme der zu überziehenden Artikel auf. Das Gitterband wird über Umlenkungen geführt. Unterhalb des Gitterbandes ist eine Wanne mit beheizbarem Doppelmantel vorgesehen, die auch unterhalb sämtlicher üblicher Aggregate, insbesondere einer Bodenüberziehstation mit Tunkkasten und einer Rüttelvorrichtung angeordnet ist. Eine solche Überziehmaschine weist üblicherweise Seitenwangen auf, die oben durch Abdeckbleche abgedeckt sind. Zwischen den Seitenwangen ergibt sich die Arbeitsbreite der Überziehmaschine entsprechend der Gitterbandbreite. Oberhalb der Gitterbandebene befindet sich ein Aufbau, der dachartig über die gesamte Länge und Breite der Überziehmaschine durchgeht und in dessen Bereich ein Schleierkasten, ein Gebläse zum Abblasen überschüssiger Masse von den Artikeln auf dem Gitterband sowie gegebenenfalls weiterer Elemente, wie einer Steuereinrichtung oder dergleichen, untergebracht sind. Zum Reinigen einer solchen Überziehmaschine wird Wasser in die Wanne gefüllt, dessen Temperatur oberhalb der Schmelztemperatur der Masse liegt. Das Wasser wird durch eine oder mehrere Körperpumpen vermittels eines oder mehrerer Schläuche in weitgehend druckloser Zirkulation über die zu reinigenden Aggregate geleitet. Das Waschwasser wird im Kreislauf in druckloser Zirkulation in einem Wasch- und Spülvorgang über die zu reinigenden Aggregate geleitet, wobei die dort abgesetzte Masse aufgeschmolzen wird. Die Überziehmaschine wird durch den beheizten Doppelmantel auf Temperatur gehalten. Die Verteilung des heißen Wassers erfolgt von Hand je nach dem Verschmutzungsgrad der einzelnen Aggregate feinfühlig. Die an den Aggregaten anhaftenden Reste der Masse werden aufgeschmolzen und gelangen im geschmolzenen Zustand in das Wasser, welches im Kreis geführt wird, d. h. der üblicherweise vorgesehene Ablauf an der Wanne ist während dieses Reinigungsverfahrens geschlossen. Der Wasch- und Spülvorgang wird solange durchgeführt, bis die gründliche Reinigung erfolgt ist. Die Länge dieses Wasch- bzw. Spülvorgangs kann sich nach Erfahrungswerten richten, die auch masseabhängig sein können. Die Effizienz der Reinigung und die Zeitdauer sind in starkem Maße von der Sorgfalt abhängig, mit der die Bedienungsperson den Wasch- und Spülvorgang manuell durchführt. Die wesentlichen zu reinigenden Aggregate werden während des Wasch- und Spülvorgangs vorzugsweise angetrieben. Im Anschluss an den Wasch- und Spülvorgang kann eine Trocknung durchgeführt werden, indem bei weiterhin beheiztem Doppelmantel das Gebläse der Überziehmaschine dazu benutzt wird, um Luft auf die Aggregate und durch das Gitterband zu blasen.

Aus der DE 42 43 814 C1 ist eine Überziehmaschine bekannt, bei der eine Reinigung der Maschinenteile mit einer Spülmasse bei einem Massewechsel mit größerer Sicherheit und verbesserter Zugänglichkeit der Aggregate unterhalb des oberen Trums der Überziehmaschine durchgeführt werden kann. Zu diesem Zweck weist die Überziehmaschine eine Spanneinrichtung mit einem das Hochheben des Gitterbandes ermöglichenden vergrößerten Spannweg auf. Es sind Mittel zur Halterung des hochgehobenen Gitterbands, insbesondere am Rahmen der Überziehmaschine angeordnete Auflager zur Aufnahme von Trägern, vorgesehen. Damit ist das Gitterband hochhebbar gestaltet und insbesondere mit Hilfe von Auflagern und Trägern in hochgehobenem Zustand abstützbar, so dass die unterhalb des oberen Trums des Gitterbands befindlichen Aggregate, also beispielsweise eine Rüttelvorrichtung, eine Bodenüberziehstation, eine Bodenabstreichwalze und dergleichen für die Reinigung mit einer Spülmasse unmittelbar zugänglich sind und die Reinigung damit leichter, einfacher und schneller und mit größerer Sicherheit durchgeführt werden kann. Das Gitterband ist somit derart anhebbar, dass die Aggregate unterhalb des angehobenen Gitterbandes von der Seite her frei zugänglich werden. In hochgehobenem Zustand entsteht zwischen dem hochgehobenen Trum des Gitterbandes und der Oberfläche der Aggregate ein Abstand in der Größenordnung von 20-30 cm, so dass hier ohne Weiteres die Spülmasse mit einer Lanze oder Düse gerichtet und ohne Versprühung durch das Gitterband direkt auf die zu reinigenden Aggregate gerichtet werden kann. Andererseits sollte als Spülmasse insbesondere Kakaobutter, nicht dagegen Heißwasser, eingesetzt werden, so dass nicht die Gefahr einer Kontamination besteht.

### AUFGABE DER ERFINDUNG

Der Erfindung liegt die Aufgabe zugrunde, ein Verfahren und eine Vorrichtung zum Reinigen einer Überziehmaschine sowie eine reinigbare Überziehmaschine bereitzustellen, bei denen eine gründliche Reinigung der Aggregate und Maschinenteile der Überziehmaschine unter Verwendung von heißem Wasser mit großer Zuverlässigkeit ermöglicht wird.

### LÖSUNG

Die Aufgabe der Erfindung wird erfindungsgemäß mit den Merkmalen der unabhängigen Patentansprüche 1, 5 bzw. 6 gelöst.

### BESCHREIBUNG DER ERFINDUNG

Das erfindungsgemäße Verfahren geht von der Vorstellung aus, den Waschvorgang nicht mehr manuell und damit abhängig von der Sorgfalt der Bedienungsperson, sondern automatisch, also durch bzw. mit Hilfe einer mechanischen Vorrichtung durchzuführen. Auch soll die drucklose Zirkulation verlassen und der Wasch- und Spülvorgang nicht nur durch ein Aufschmelzen, also unter temperaturmäßiger Beeinflussung, sondern auch durch einen Spritzvorgang, also durch Eintrag mechanischer Energie unterstützt werden. Es versteht sich, dass das zur Anwendung gelangende heiße Wasser eine höhere Temperatur aufweist, als es der Schmelztemperatur der zu entfernenden Masse entspricht. Der unter Druck stehende Waschstrahl wird gesteuert auf die zu reinigenden Aggregate gerichtet, wobei auch die Richtung maschinell festgelegt ist, also nicht mehr von der Sorgfalt der Bedienungsperson abhängt. Insbesondere gelangt ein hin- und herfahrbarer Wagen, der mit Spritzdüsen besetzt ist, zur Anwendung. Der Wagen ist in einiger Entfernung oberhalb des Gitterbands angeordnet und verfahrbar, so dass von seinen aus den Spritzdüsen austretenden Strahlen sämtliche unterhalb der Gitterbandebene und/oder der Seitenwangen befindlichen und zur Verschmutzung neigenden Aggregate und Teile der Überziehmaschine erreicht werden. Bei diesem automatischen Waschen ist der Spritzabstand zwischen den Spritzdüsen und dem jeweiligen Aggregat konstant. Die Spritzdüsen des Wagens müssen so hoch angeordnet sein, dass auch Bereiche der Seitenwangen erfasst werden, die durch Spritzer von Schokolade und anderen Überzugsmassen erreichbar sind, wie sie insbesondere beim Abblasen überschüssiger Masse von den Artikeln abgeschleudert werden. Das heiße Wasser wird unter Druck stehend zum Ausspritzen gebracht, wobei der Druck mit einer entsprechenden Pumpe erzeugt wird.

Der Wagen kann mit bereichsweise unterschiedlichen Geschwindigkeiten bewegt werden. In der Regel ist der Wagen so ausgebildet und angeordnet, dass er sich über die Arbeitsbreite erstreckt und in Laufrichtung des Gitterbandes bzw. entgegengesetzt dazu in einem rechteckig begrenzten Feld verfahren wird. Das Verfahren kann in der einfachsten Form manuell geschehen. Vorzugsweise wird jedoch ein Antrieb für den Wagen angesetzt, der einen Elektromotor, einen pneumatischen Motor, einen hydraulischen Motor oder dergleichen aufweisen kann. Die Führung des Wagens erfolgt in einer horizontalen Ebene. Auch ein Antrieb unter Verwendung von Pneumatikzylindern ist möglich. Unterschiedliche Geschwindigkeiten können dazu benutzt werden, um in stark verschmutzten Stellen und Bereichen der Überziehmaschine mit verminderter Geschwindigkeit zu fahren oder sogar Stillstandszeiten einzuplanen oder festzulegen. Bei dem automatischen Ausbringen von Spritzstrahlen in festgelegter Richtung relativ zu den zu reinigenden Aggregaten wird eine große Sicherheit im Reinigungsvorgang erzielt. Die Abhängigkeit von der Sorgfalt einer Bedienungsperson ist damit aufgehoben. Die gesteuerte Geschwindigkeit des Wagens kann in Abhängigkeit von der abzureinigenden Masse und entsprechenden Erfahrungswerten beim Massewechsel festgelegt werden.

Für die Vorrichtung zum Reinigen einer Überziehmaschine zur Verarbeitung von Schokolade und ähnlichen Massen mit heißem Wasser ist es wichtig, dass ein mit Spritzdüsen besetzter Wagen vorgesehen ist. Dieser Wagen wird oberhalb der Gitterbandebene in einem solchen Abstand geführt, dass mit den aus den Spritzdüsen austretenden Wasserstrahlen nicht nur der gesamte obere Trum des Gitterbands, sondern auch die anderen zur Verschmutzung neigenden Aggregate der Überziehmaschine unterhalb der Gitterbandebene erreicht werden. Die Spritzdüsen des Wagens sind nach unten gerichtet und an einen eine Pumpe enthaltenden Kreislauf für das heiße Wasser angeschlossen. Es kann alternativ auch heißes Frischwasser eingesetzt werden. In beiden Fällen ist auch die Richtung der Spritzstrahlen festgelegt, sofern die Spritzdüsen des Wagens mit vorgegebener Richtung ortsfest angeordnet sind. Es empfiehlt sich die Spritzdüsen in Form mehrerer Spritzleisten, über die Arbeitsbreite der Überziehmaschine reichend anzuordnen, und zwar in unterschiedlichen Neigungswinkeln, damit an den zu reinigenden Aggregaten keine Toträume entstehen, die durch die Spritzstrahlen nicht erfassbar sind. Es ist natürlich auch möglich, die Spritzdüsen beweglich anzuordnen und die Spritzstrahlen in einer entsprechenden Folge gesteuert veränderlich zu neigen, um beispielsweise nahezu den gesamten Umfang der Spannwalze des Gitterbandantriebs zu erreichen. In der Regel und zur Einsparung von Wasser wird die Pumpe an einen Kreislauf für heißes Wasser angeschlossen, d. h. es wird ein geschlossener Kreislauf für heißes Wasser gebildet, den die Pumpe antreibt. Es ist aber auch möglich, die Pumpe an eine externe Wasserversorgung für heißes Wasser, beispielsweise eine betrieblich vorhandene Versorgung mit frischem Heißwasser, anzuschließen, so dass dann mit frischem Heißwasser gearbeitet wird.

In der Regel kann der Wagen mit einem eigenen Antrieb versehen sein. Der Antrieb wird insbesondere von einem Elektromotor gebildet. Es kann eine Steuereinrichtung zur Ansteuerung des Antriebs des Wagens und der im Kreislauf angeordneten Pumpe vorgesehen sein. Damit ist es möglich, die Steuereinrichtung mit einem Wasch- und Spülprogramm auszustatten oder diesbezüglich programmierbar zu gestalten, um Einfluss auf den Wasch- und Spülvorgang zu nehmen. Besondere Stellen, die verstärkt zur Verschmutzung neigen, können so bedarfsgerecht gewaschen und gereinigt werden, während der Antrieb des Wagens an solchen Stellen, die weniger zur Verschmutzung neigen, mit einer vergleichsweise höheren Geschwindigkeit hin- und herbewegt werden kann. Geschwindigkeiten in der Größenordnung von mehreren Zentimetern pro Sekunde sind durchaus sinnvoll. Es können auch Stillstandszeiten einprogrammiert werden. Die Bewegungsumkehr durch den Wagen kann mit Hilfe von Endschaltern oder aber auch gesteuert durch die Steuereinrichtung erfolgen.

In der Regel reicht der Wagen mit seiner Spritzleiste über die Arbeitsbreite und wird in Laufrichtung des Gitterbandes hin- und herbewegt. Die Bewegung ist so abgestimmt, dass der gesamte zu reinigende Bereich oberhalb der Wanne von den Spritzstrahlen erfasst wird. In bevorzugter Ausführungsform kann der Wagen vier Räder aufweisen, die auf den oben angeordneten Abdeckblechen der Seitenwangenverkleidung laufen. Durch die vier Räder ist eine Ebene festgelegt, zu der die Spritzdüsen in der erforderlichen Neigung angeordnet sind. Die Steuereinrichtung für den Antrieb ist positionszeitgesteuert ausgebildet und/oder programmierbar, so dass die Reinigung individuell auf die einzelnen Aggregate abgestimmt werden kann. Die Versorgung der Steuereinrichtung zum Ansteuern des Antriebs erfolgt bevorzugt über die insbesondere im Dachbereich angeordnete Steuervorrichtung zur Betätigung der Elemente der Überziehmaschine. Insoweit ist der verfahrbare Wagen einschließlich seiner Führung in der Regel der einzelnen Überziehmaschine zugeordnet. Weiterhin ist es möglich, dass auch die angeordnete Pumpe sowie Filter, Ventile und Anschlüsse auf der Überziehmaschine, insbesondere in dem Raum unterhalb der Wanne der Überziehmaschine, angeordnet und untergebracht sein können. Dann ist die Überziehmaschine mit einer Reinigungsvorrichtung kombiniert. Es ist aber auch möglich, wesentliche Bestandteile der Vorrichtung zu einer separaten Baueinheit zusammenzufassen, mit der dann je nach Bedarf verschiedene Überziehmaschinen gereinigt werden können. Auf einer solchen separaten Einrichtung ist bevorzugt die Pumpe für den Kreislauf des Wasch- und Spritzwassers angeordnet, ebenso ein Grobfilter, ein Feinfilter sowie mehrere Ventile. Auch eine Heizeinrichtung zum Aufheizen des im Umlauf geförderten Waschwassers kann Bestandteil der separaten Einheit sein. Sowohl die Bewegung des verfahrbaren Wagens wie auch das Ausspritzen der Spritzstrahlen können auch intermittierend oder pulsierend erfolgen. In der Regel wird ein kontinuierliches Spritzen jedoch bevorzugt. Der Spritz- und Spülvorgang kann aber auch zeit- und bewegungsgesteuert durchgeführt werden. Der Wagen weist auf jeden Fall nach unten gerichtete Spritzdüsen auf, kann aber auch mit nach oben gerichteten Spritzdüsen versehen sein. Die nach unten gerichteten Spritzdüsen sind vorzugsweise an den Kreislauf für in Umlauf geführtes heißes Wasser angeschlossen, während die nach oben gerichteten Spritzdüsen, mit denen die Unterseite des dachförmigen Aufbaus der Überziehmaschine sowie die Seitenwandungen gereinigt werden, vorzugsweise an Frischwasser angeschlossen sind. Die Verschmutzung oberhalb der Gitterbandebene ist meist erheblich geringer. Insoweit können auch die nach oben gerichteten Spritzdüsen fehlen. Die Düsen sind insbesondere schrägstehend an dem Wagen angeordnet, wobei durch die Anordnung mehrerer Düsenleisten unterschiedlich geneigte Spritzstrahlen erzeugt werden, mit deren Hilfe ein möglichst großer Anteil der Oberfläche der zu reinigenden Aggregate direkt erfasst wird. Die Spritzdüsen in Form der Düsenleisten sind vorzugsweise vorn und hinten am Wagen angeordnet, um den verfahrbaren Weg oberhalb der Wanne möglichst vollständig auszunutzen.

Die Spritzdüsen des Wagens können auch an Trocknungsluft anschließbar ausgebildet sein. Auf diese Weise ist nach einem Wasch- und Spülvorgang ein Trocknungsvorgang durchführbar, mit dem heiße Luft zur Trocknung eingesetzt wird. Dabei werden erhebliche Luftgeschwindigkeiten erzielt. Auch das üblicherweise vorhandene Gebläse einer Überziehmaschine kann in den Trocknungsvorgang einbezogen werden. Die Beheizung der Überziehmaschine im Bereich der Wanne durch einen Doppelmantel dient weiterhin der Einbringung von Wärme zu bzw. an die Aggregate der Überziehmaschine, so dass eine Resttrocknung der Aggregate durch Wärme erfolgt.

Das Verfahren und die Vorrichtung besitzen eine Reihe von Vorteilen. Der Wasch-, Spül- und Trocknungsvorgang kann letztlich automatisch ablaufen, also mit großer Zuverlässigkeit und entsprechend gemachten Erfahrungen. Es können Wasch- und Spülvorgänge automatisch gesteuert durchgeführt werden, ähnlich wie sie bei Geschirrspülmaschinen bekannt sind. Weiterhin tritt vorteilhaft eine Ersparnis von heißem Wasser ein, insbesondere wenn im Kreislauf gearbeitet wird. Auch die Waschzeiten verkürzen sich durch die Automatisierung. Es sind je nach Anwendungsfall Waschzeiten in der Größenordnung von ein bis zwei Stunden erreichbar. Es versteht sich, dass dem heißen Wasser Reinigungsmittel, Fettlösemittel, Emulgatoren, Klarspüler und dergleichen gezielt zugegeben werden können, so dass auch hier ähnliche Vorgänge wie bei einer Waschmaschine, einem Geschirrspüler oder dergleichen programmgesteuert ablaufen können.

### KURZBESCHREIBUNG DER FIGUREN

Im Folgenden wird die Erfindung anhand in den Figuren dargestellter bevorzugter Ausführungsbeispiele weiter erläutert und beschrieben.
- **Fig. 1**: zeigt eine schematisierte Seitenansicht einer Überziehmaschine mit Nassreinigung in einer ersten Ausführungsform.
- **Fig.2**: zeigt eine schematisierte Seitenansicht einer Überziehmaschine und einer daran angeschlossenen Vorrichtung zur Nassreinigung.
- **Fig.3**: zeigt eine schematisierte Seitenansicht einer Überziehmaschine mit integrierter Vorrichtung für eine Nassreinigung.
- **Fig. 4**: zeigt eine Ansicht der Überziehmaschine von der hinteren Stirnseite.

### FIGURENBESCHREIBUNG

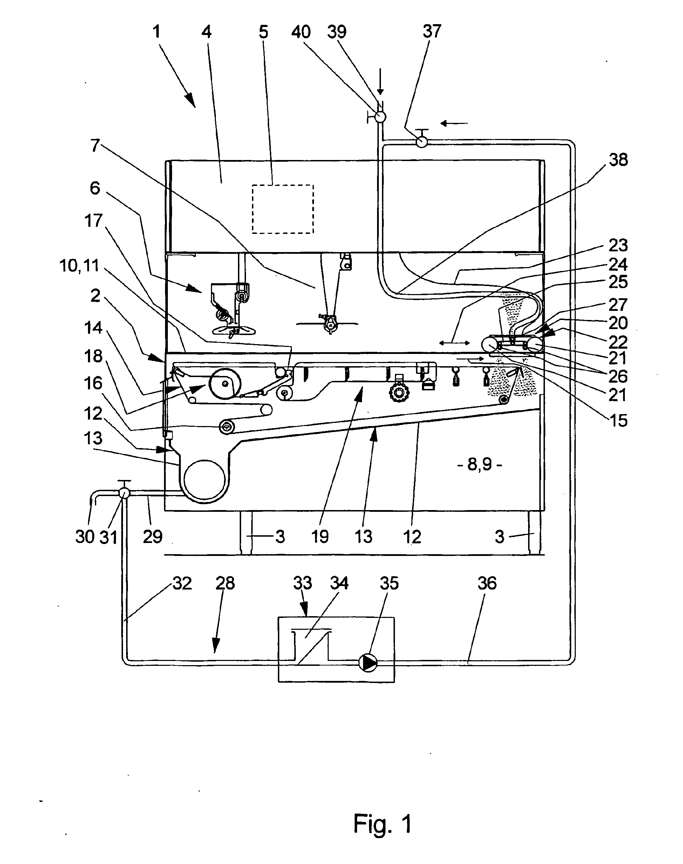

In **Fig. 1** ist in stark schematisierter Seitenansicht eine Überziehmaschine 1 verdeutlicht, wobei sichtbare und unsichtbare Kanten in gleicher Weise angedeutet sind. Die Überziehmaschine 1 weist in bekannter Weise einen Rahmen 2 auf, der unten auf Beinen 3 abgestützt ist und in seinem oberen Bereich eine Brücke 4 aufweist, die zur Unterbringung einer elektronischen Steuereinrichtung 5 genutzt werden kann. Die Brücke 4 dient im Übrigen der Aufhängung eines Schleierkastens 6 und eines Gebläses 7, welches in bekannter Weise zum Abblasen überschüssiger Überzugsmasse von den zu überziehenden Artikeln eingesetzt wird.

Der untere Bereich des Rahmens 2 der Überziehmaschine 1 trägt rechts und links parallel zur Arbeitsrichtung zwei Seitenwangen 8 und 9, die zur Lagerung und Unterbringung verschiedener Aggregate dienen. Die Seitenwangen 8 und 9 weisen an ihrem oberen Ende je ein Verkleidungsblech 10, 11 auf und nehmen zwischen sich eine Wanne 12 auf, die mit einem Doppelmantel 13 versehen bzw. ausgebildet ist, der an einen mit Wasser betriebenen Heizkreislauf angeschlossen ist, um die Überziehmaschine 1 mit ihren verschiedenen Aggregaten zu erwärmen und einem Verfestigen der Überzugsmasse entgegenzuwirken.

Bestandteil der Überziehmaschine 1 ist ein Gitterband 14, welches gemäß Pfeil 15 um verschiedene Umlenkwalzen, Messerkanten und eine Spannrolle geführt ist. Das Gitterband 14 wird vermittels einer Antriebswalze 16, die von einem nicht dargestellten Motor angetrieben wird, umlaufend angetrieben. Die Steuerung des Motors und damit der Antriebswalze 16 erfolgt über die elektronische Steuereinrichtung 5. Das Gitterband 14 liegt bzw. definiert mit seinem oberen Trum eine Gitterbandebene 17. Unterhalb des oberen Trums des Gitterbandes 14 und damit der Gitterbandebene 17 befindet sich eine Bodenwallstation 18, eine Rüttelvorrichtung 19 sowie gegebenenfalls weitere Abstreifwalzen und sonstige Aggregate. Sofern Aussagen über Aggregate gemacht werden, handelt es sich dabei um alle Teile, die unterhalb der Gitterbandebene 17 angeordnet sind, an denen sich Überzugsmasse absetzen kann und die von einer solchen Überzugsmasse bei einem Massewechsel gereinigt werden müssen. Die Aggregate fassen insbesondere das Gitterband 14, sämtliche Umlenkrollen, die Antriebsrolle und die Spannrollen sowie eine eventuell vorgesehene Bodenwallstation 18 und eine Rüttelvorrichtung 19 zusammen. Sämtliche genannten Aggregate befinden sich zwischen der Gitterbandebene 17 und der Wanne 12. Anders gesagt, umschließt die Wanne 12 von unten her diese Aggregate, so dass abtropfende Überzugsmasse letztlich von der Wanne 12 aufgefangen wird. Die Überzugsmasse wird in bekannter Weise im Kreislauf geführt und über den Schleierkasten 6 auf die zu überziehenden Artikel verbracht. Diese Artikel sind nicht dargestellt. Sie liegen auf dem oberen Trum des Gitterbandes 14 und durchlaufen von der links in Fig. 1 gezeigten Einlaufseite durch die Überziehmaschine 1 hindurch und treten auf der rechten Seite aus. Es versteht sich, dass an das obere Trum des Gitterbandes 14 Zu- und Abführbänder (nicht dargestellt) anschließen, die den Transport der Artikel übernehmen.

Oberhalb der Gitterbandebene 17 und in einem festgelegten Abstand dazu ist ein Wagen 20 vorgesehen. Der Wagen 20 besitzt zwei über die Arbeitsbreite durchgehende Achsen oder Wellen, an deren Enden jeweils Räder 21 angeordnet sind. Von den insgesamt vier Rädern laufen zwei Räder auf dem Verkleidungsblech 10 und die beiden anderen Räder auf dem Verkleidungsblech 11. Der Wagen 20 verfügt über eine Antriebswelle mit einem Antrieb 22, z. B. in Form eines nicht dargestellten Motors, der ebenfalls über die elektronische Steuereinrichtung 5 gesteuert wird. Die elektrische Versorgung und Steuerung des Wagens 20 erfolgt über eine elektrische Leitung 23. Auf diese Weise ist der Wagen 20 in der durch die Verkleidungsbleche 10 und 11 aufgespannten Ebene gemäß Pfeil 24 hin- und herverfahrbar. Der Wagen 20 weist ein Fahrgestell 25 auf, welches mit nach unten gerichteten Spritzdüsen 26 besetzt ist. Die nach unten gerichteten Spritzdüsen 26 sind in Form einer Spritzleiste oder einer Düsenleiste angeordnet, die über die Arbeitsbreite reicht. Die Spritzdüsen 26 können senkrecht nach unten geneigt angeordnet sein. Es ist aber auch möglich, die Spritzdüsen 26 etwas geneigt nach unten zu richten, um Todräume an den zu reinigenden Aggregaten zu vermeiden. Die Spritzdüsen 26 könnten auch gesteuert in bestimmten Winkelbereichen verstellbar angeordnet sein, um eine möglichst vollständige Reinigung der Aggregate zu ermöglichen. An dem Fahrgestell 25 können auch nach oben gerichtete Spritzdüsen 27 vorgesehen sein, die zur Reinigung der oberhalb der Gitterbandebene 17 angeordneten Elemente dienen, also insbesondere zum Abspritzen der Unterseite der Brücke 4 und der daran angeordneten Elemente, insbesondere des Schleierkastens 6 und des Gebläses 7. Der Wagen 20 wird mit Hilfe seines Antriebs 22 gemäß Pfeil 24 hin- und hergehend verfahren, so dass er sämtliche zu reinigenden Aggregate oberhalb der Wanne 12 erfasst. Der Hub des Wagens 20 erfasst die gesamte Länge der Überziehmaschine 1, wobei sichergestellt ist, dass das aus den Spritzdüsen 26 austretende Wasser in die Wanne 12 gelangt und dort aufgesammelt wird.

Die Versorgung des Wagens 20 mit heißem Wasser erfolgt über einen Kreislauf 28. Bestandteil des Kreislaufs 28 ist ein Leitungsstück 29, welches von der tiefsten Stelle der Wanne 12 ausgeht und zu einem Wasserablauf 30 führt, über den letztendlich nach Beendigung eines Wasch- und Reinigungsvorgangs das verschmutzte Waschwasser abgeführt werden kann. In dem Leitungsstück 29 ist ein Ventil 31 angeordnet, von dem ein Leitungsstück 32 zu einer Vorrichtung 33 führt, die als von der Überziehmaschine 1 separates getrenntes Vorrichtungsteil ausgebildet ist. Wesentlicher Bestandteil dieser Vorrichtung 33 kann ein bewegliches Gestell sein, auf welchem ein Filter 34 und eine Pumpe 35 angeordnet sind. Von der Pumpe 35 führt ein Leistungsstück 36 über ein Ventil 37 in ein Leitungsstück 38, welches zu dem Wagen 20 und damit zu den Spritzdüsen 26 und/oder 27 führt. Es versteht sich, dass zumindest ein Teil der Leitungsstücke 29, 32, 36 und 38 als bewegliche Schlauchleitungen ausgebildet sind. Über eine Frischwasserleitung mit Ventil 40 kann kaltes oder heißes frisches Wasser in den Kreislauf 28 eingebracht oder der Kreislauf 28 bzw. die Wanne 12 damit bis zu einem vorgesehenen Wasserstand gefüllt werden.

Sofern eine betriebsinterne Heißwasserversorgung vorgesehen ist, kann der Anschluss an die Frischwasserleitung 39 erfolgen, um den Waschvorgang von vornherein mit heißem Wasser beginnen zu können. Es ist aber auch möglich, durch entsprechende Heizeinrichtungen, insbesondere unter Einschluss des Doppelmantels 13, eine Aufheizung oder Mitaufheizung des Wassers zu ermöglichen.

Der Wasch- und Reinigungsvorgang läuft wie folgt ab:

Zunächst wird in der Wanne 12 noch vorhandene flüssige Überzugsmasse über den Wasserablauf 30 abgeführt. Anschließend wird das Ventil 31 umgestellt und die Wanne 12 mit heißem Wasser gefüllt. Der Füllvorgang kann durch eine Niveausonde (nicht dargestellt) beendet werden. Der Füllstand ist etwa im Bereich der Antriebswalze 16 vorgesehen. Durch entsprechende Schaltung der Ventile 31, 37 und 40 wird der Kreislauf 28 geschlossen und dieser über die Pumpe 35 in Bewegung gesetzt. Auch die Steuerung eines solchen Wasch- und Reinigungsvorgangs kann über die Steuereinrichtung 5 erfolgen. Der Wagen 20 wird ebenfalls über die Steuereinrichtung 5 gesteuert in Bewegung gesetzt, wobei er sich gemäß Pfeil 24 über die gesamte Länge der Überzugsmaschine 1 in Bewegung setzt. Die Bewegung kann zweckmäßig in Bewegungsabschnitte unterteilt sein, in denen sich der Wagen 20 mit unterschiedlichen Geschwindigkeiten bewegt, wie es für die Reinigung der jeweils bespritzten Aggregate erforderlich ist. Auch Stillstandszeiten können einprogrammiert sein. Auch die zeitliche Dauer eines solchen Wasch- und Reinigungsvorgangs ist programmierbar, auf Erfahrungswerte einstellbar und damit an verschiedene Massen anpassbar.

Es ist zweckmäßig, zunächst nur die nach unten gerichteten Spritzdüsen 26 mit Waschwasser aus dem Kreislauf 28 zu versorgen und insoweit den Teil der Überziehmaschine 1 zu reinigen, der unterhalb der Gitterbandebene 17 angeordnet ist. Nachdem die unterhalb der Gitterbandebene 17 angeordneten Aggregate gereinigt sind, wird das im Kreislauf 28 befindliche Waschwasser mit der abgelösten Überzugsmasse über den Wasserablauf 30 entsorgt, wobei auch der Filter 34 rückgespült werden kann.

Zur Reinigung der oberhalb der Gitterbandebene 17 angeordneten Elemente werden die nach oben gerichteten Spritzdüsen 27 versorgt. Dies kann entweder dadurch erfolgen, dass auch hier ein Kreislauf 28 von Heißwasser zur Verfügung gestellt wird. Es ist aber auch möglich, diese Reinigung der oberen Elemente jeweils nur mit frischem heißem Wasser durchzuführen, welches über die Frischwasserleitung 39 und eine nicht dargestellte Pumpe unter Druck gesetzt wird.

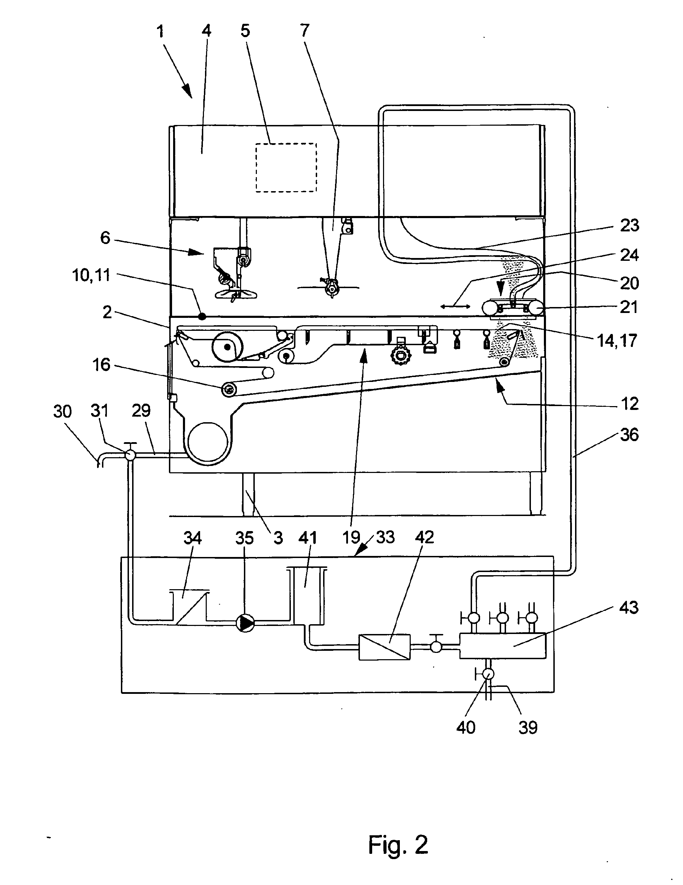

Die in **Fig. 2** dargestellte Ausführungsform stimmt hinsichtlich der Überziehmaschine 1 in weiten Bereichen mit der Darstellung der Fig. 1 überein, so dass hierauf im vollen Umfange verwiesen werden kann.

Die Vorrichtung 33 ist hier jedoch etwas umfangreicher ausgebildet und stellt einen in sich verfahrbaren Modul dar, der nacheinander an verschiedenen Überziehmaschinen eingesetzt und angeschlossen werden kann, je nach dem, wo gerade ein Massewechsel erforderlich ist. Die Vorrichtung 33 weist auch hier ein Filter 34 auf, welches als Grobfilter ausgebildet ist. Es ist auch ein Feinfilter 41 vorgesehen, welches hier der Pumpe 35 nachgeschaltet angeordnet ist. Eine elektrische Heizeinrichtung 42 dient der Erwärmung des Waschwassers im Kreislauf 28 sowie dem Warmhalten des Waschwassers im Umlauf. Die Frischwasserleitung 39 mit dem Ventil 40 ist hier direkt an einem Verteiler 43 angeschlossen.

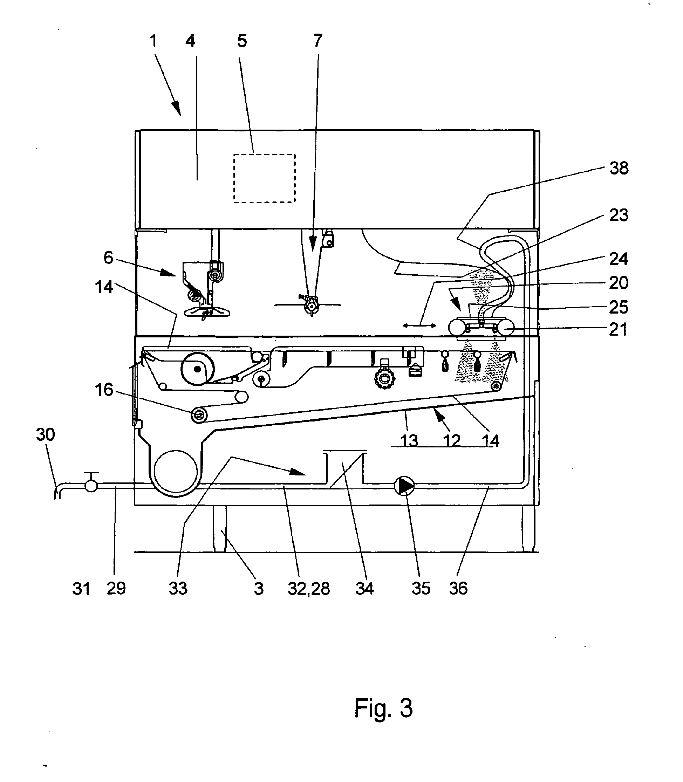

**Fig. 3** verdeutlicht, dass die Vorrichtung 33 auch der einzelnen Überziehmaschine 1 zugeordnet und ortsfest insbesondere im Raum unterhalb der Wanne 12 angeordnet sein kann. Es versteht sich, dass die verschiedenen Leitungsstücke des Kreislaufs 28 ortsfest montiert sein können, mit Ausnahme des beweglichen Leitungsstückes 38, welches die hin- und herfahrende Bewegung des Wagens 20 mitmachen muss.

Bei allen Ausführungsformen sind die Räder 21 des Wagens 20 auf den Verkleidungsblechen 10 und 11 der Seitenwangen 8 bzw. 9 verfahrbar. Es versteht sich, dass die lineare Bewegung des Wagens 20 auch in anderer Weise erreicht werden kann, beispielsweise durch Verwendung von Zahnrädern auf Zahnstangen, unter Einsatz von Führungsstangen und eines beispielsweise pneumatisch ausgebildeten Antriebs für die hin- und hergehende Bewegung des Wagens 20. Die Verkleidungsbleche 10 und 11 können auch winklig abgesetzt gekantet sein, um gleichsam ein Bett zur Führung des Wagens 20 bereitzustellen, damit der Wagen 20 immer mittig zur Längsachse der Überziehmaschine 1 gesichert ist.

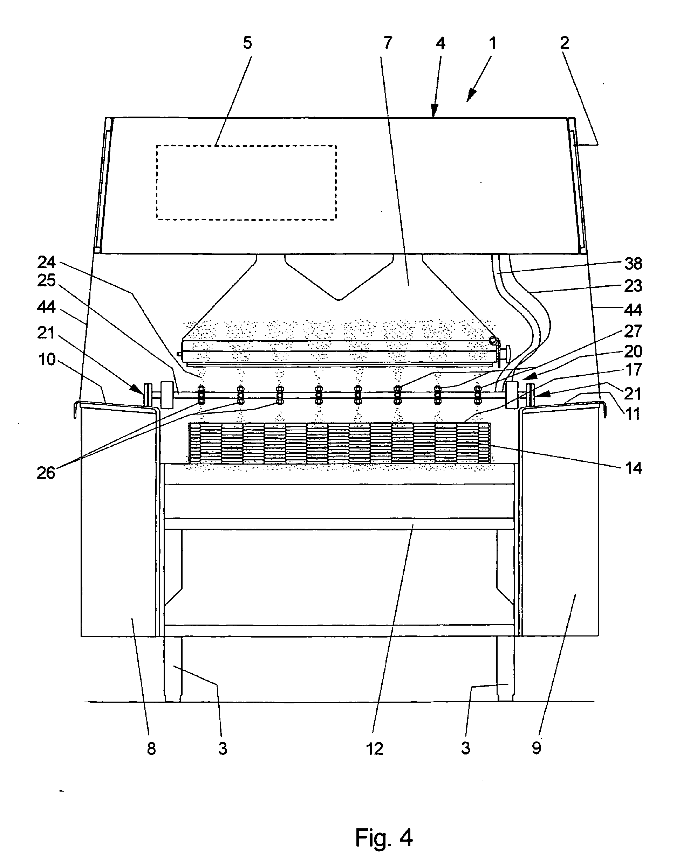

**Fig. 4** zeigt eine Stirnansicht der Überziehmaschine 1 von der Auslaufseite aus gesehen. Die relative Breite der Seitenwangen 8, 9 zur Breite der Wanne 12 ist erkennbar. Die Verkleidungsbleche 10, 11 sind hier nicht horizontal, sondern nach innen geneigt ausgebildet und angeordnet. Sie gehen damit einerseits muldenförmig dekorativ in die Gitterbandebene 17 über. Andererseits begünstigen sie den Ablauf von Waschwasser aus den nach oben gerichteten Düsen 27 in die Wanne 12. Ein großer Teil des Waschwassers läuft innen an Klappen 44 aus durchsichtigem Kunststoff herab, die sich während des Waschvorgangs in geschlossenem Zustand zwischen der Brücke 4 und den Verkleidungsblechen 10 bzw. 11 befinden. Aus Fig. 4 ist auch erkennbar, dass alle zu reinigenden Aggregate unterhalb der Gitterbandebene 17 zwischen den Seitenwangen 8, 9 von den Spritzstrahlen der nach unten gerichteten Düsen 26 erfasst werden.

### BEZUGSZEICHENLISTE

- 1: Überziehmaschine
- 2: Rahmen
- 3: Bein
- 4: Brücke
- 5: Steuereinrichtung
- 6: Schleierkasten
- 7: Gebläse
- 8: Seitenwange
- 9: Seitenwange
- 10: Verkleidungsblech
- 11: Verkleidungsblech
- 12: Wanne
- 13: Doppelmantel
- 14: Gitterband
- 15: Pfeil
- 16: Antriebswalze
- 17: Gitterbandebene
- 18: Bodenwallstation
- 19: Rüttelvorrichtung
- 20: Wagen

- 21: Rad
- 22: Antrieb
- 23: Leitung
- 24: Pfeil
- 25: Fahrgestell
- 26: Spritzdüse
- 27: Spritzdüse
- 28: Kreislauf
- 29: Leitungsstück
- 30: Wasserablauf
- 31: Ventil
- 32: Leitungsstück
- 33: Vorrichtung
- 34: Filter
- 35: Pumpe
- 36: Leitungsstück
- 37: Ventil
- 38: Leitungsstück
- 39: Frischwasserleitung
- 40: Ventil
- 41: Feinfilter
- 42: Heizeinrichtung
- 43: Verteiler
- 44: Klappe

## Patentansprüche

1. Verfahren zum Reinigen einer Überziehmaschine (1) zur Verarbeitung von Schokolade und ähnlichen Massen, wobei die Überziehmaschine (1) eine Mehrzahl von zu reinigenden Aggregaten (14, 16, 18, 19, 6, 7, usw.) aufweist, **dadurch gekennzeichnet, dass** heißes Wasser unter Druck stehend automatisch gesteuert auf die zu reinigenden Aggregate (14, 16, 18, 19, usw.) gespritzt wird.

2. Verfahren nach Anspruch 1, **dadurch gekennzeichnet, dass** das heiße Wasser unter Druck stehend mit Hilfe eines oberhalb eines Gitterbandes (14) der Überziehmaschine (1) hin- und herfahrbaren und mit Spritzdüsen (26; 27) besetzten Wagens (20) gesteuert auf die zu reinigenden Aggregate (14, 16, 18, 19; 6, 7, usw.) gespritzt wird.

3. Verfahren nach Anspruch 2, **dadurch gekennzeichnet, dass** der Wagen (20) mit bereichsweise unterschiedlichen Geschwindigkeiten bewegt wird.

4. Verfahren nach einem der Ansprüche 1 bis 3, **dadurch gekennzeichnet, dass** die Überziehmaschine (1) einen Rahmen (2), ein darin gelagertes und umlaufend antreibbares Gitterband (14) zur Aufnahme der zu überziehenden Artikel und eine Wanne (12) mit beheizbarem Doppelmantel (13) ausweist und das Wasser in die Wanne (12) gefüllt und mit Hilfe einer Pumpe (35) im Kreislauf (28) über die zu reinigenden Aggregate (14, 16, 18, 19, usw.) geleitet wird.

5. Vorrichtung zum Reinigen einer Überziehmaschine (1) zur Verarbeitung von Schokolade und ähnlichen Massen, wobei die Überziehmaschine (1) ein umlaufend antreibbares Gitterband (14) zur Aufnahme der zu überziehenden Artikel und mindestens ein weiteres zu reinigendes Aggregat (16, 18, 19, usw.) aufweist, wobei das Gitterband (14) eine Gitterbandebene (17) definiert, insbesondere zur Durchführung des Verfahrens nach einem der Ansprüche 1 bis 4, **dadurch gekennzeichnet, dass** ein mit Spritzdüsen (26; 27) besetzter Wagen (20) vorgesehen ist, der oberhalb der Gitterbandebene (17) geführt und hin- und hergehend derart antreibbar ist, dass heißes Wasser unter Druck stehend automatisch gesteuert auf die zu reinigenden Aggregate (14, 16, 18, 19, usw.) gespritzt wird.

6. Reinigbare Überziehmaschine (1) zur Verarbeitung von Schokolade und ähnlichen Massen, mit
einem umlaufend antreibbaren Gitterband (14) zur Aufnahme der zu überziehenden Artikel, wobei das Gitterband (14) eine Gitterbandebene (17) definiert, und
einem Wagen (20), der eine Mehrzahl von Spritzdüsen (26; 27) aufweist und oberhalb der Gitterbandebene (17) geführt und derart hin- und hergehend antreibbar ist, dass heißes Wasser unter Druck stehend automatisch gesteuert auf das zu reinigende Gitterband (14) gespritzt wird.

7. Vorrichtung nach Anspruch 5 oder Überziehmaschine nach Anspruch 6, **dadurch gekennzeichnet, dass** die Spritzdüsen (26; 27) des Wagens (20) an einen eine Pumpe (35) enthaltenden Kreislauf (28) für das heiße Wasser und/oder einen Frischwasseranschluss angeschlossen sind.

8. Vorrichtung nach Anspruch 7 oder Überziehmaschine nach Anspruch 7, **dadurch gekennzeichnet, dass** der Wagen (20) mit einem Antrieb (22) versehen ist, und dass eine Steuereinrichtung (5) zur Ansteuerung des Antriebs (22) des Wagens (20) und der in dem Kreislauf (28) angeordneten Pumpe (35) vorgesehen ist.

9. Vorrichtung nach einem der Ansprüche 5 bis 8 oder Überziehmaschine nach einem der Ansprüche 6 bis 8, **dadurch gekennzeichnet, dass** die Steuereinrichtung (5) positionszeitgesteuert ausgebildet ist.

10. Vorrichtung nach einem der Ansprüche 5 bis 9 oder Überziehmaschine nach einem der Ansprüche 6 bis 9, **dadurch gekennzeichnet, dass** der Wagen (20) nach unten gerichtete Spritzdüsen (26) und nach oben gerichtete Spritzdüsen (27) aufweist, wobei die nach unten gerichteten Spritzdüsen (26) vorzugsweise an den Kreislauf (28) für im Umlauf geführtes heißes Wasser und die nach oben gerichteten Spritzdüsen (27) an Frischwasser angeschlossen sind.

11. Vorrichtung nach einem der Ansprüche 5 bis 10 oder Überziehmaschine nach einem der Ansprüche 6 bis 10, **dadurch gekennzeichnet, dass** die Spritzdüsen (26, 27) an dem Wagen (20) in mehreren über die Arbeitsbreite reichenden Düsenreihen mit unterschiedlicher Neigung angeordnet sind.

12. Vorrichtung nach einem der Ansprüche 5 bis 11 oder Überziehmaschine nach einem der Ansprüche 6 bis 11, **dadurch gekennzeichnet, dass** die Spritzdüsen (26, 27) des Wagens (20) an Trocknungsluft anschließbar ausgebildet sind.

## Claims

1. A method of cleaning a coating machine (1) for applying chocolate or similar masses onto confectionery articles, the coating machine (1) comprising a plurality of aggregates (14, 16, 18, 19, 6, 7, etc.) to be cleaned, **characterized in that** pressurized hot water is sprayed onto the aggregates (14, 16, 18, 19, etc.) to be cleaned in an automatically controlled way.

2. The method of claim 1, **characterized in that** the pressurized hot water is sprayed in a controlled way through nozzles (26; 27) of a cart (20) onto the aggregates (14, 16, 18, 19, 6, 7, etc.) to be cleaned, the cart (20) being arranged above the grating belt (14) in the coating machine (1) and being movable back and forth within the coating machine.

3. The method of claim 2, **characterized in that** the cart (20) is controlled to move with different velocities in different sections of the coating machine.

4. The method of one of the claims 1 to 3, **characterized in that** the coating machine (1) includes a frame (2), a rotatingly driven grating belt (14) arranged on the frame and being designed and arranged to support confectionery articles to be coated, and a tub (12) having a heatable double casing (13), and **in that** the tub (12) is filled with the water, the water is guided in a circuit (28) having a pump (35) over the aggregates (14, 16, 18, 19, etc.) to be cleaned.

5. An apparatus for cleaning a coating machine (1) for coating confectionery articles with chocolate or similar masses, the coating machine (1) including a rotatingly driven grating belt (14) being designed and arranged to support confectionery articles to be coated and at least one further aggregate (16, 18, 19, etc.) to be cleaned, the grating belt (14) defining a grating belt plane (17), especially for applying the method of one of the claims 1 to 4, **characterized in that** a cart (20) including a plurality of spraying nozzles (26; 27) is provided, the cart being designed to be moved back and forth in the coating machine above the grating belt plane (17), and **in that** pressurized hot water is sprayed onto the aggregates (14, 16, 18, 19, etc.) to be cleaned in an automatically controlled way.

6. A cleanable coating machine (1) for coating confectionery articles with chocolate or similar masses, the coating machine (1) including a rotatingly driven grating belt (14) being designed and arranged to support confectionery articles to be coated and defining a grating belt plane (17), and a cart (20) including a plurality of spraying nozzles (26; 27) and being designed to be moved back and forth in the coating machine above the grating belt plane (17), and pressurized hot water is sprayed onto the grating belt (14) to be cleaned in an automatically controlled way.

7. The apparatus of claim 5 or the coating machine of claim 6, **characterized in that** the spraying nozzles (26; 27) of the cart (20) are connected to a circuit (28) for hot water including a pump and/or to a fresh water connection.

8. The apparatus of claim 7 or the coating machine of claim 7, **characterized in that** the cart (20) comprises a drive (22), and **in that** a control unit (5) is provided to control the drive (22) of the cart (20) and the pump (35) in the circuit (28).

9. The apparatus of one of the claims 5 to 8 or the coating machine of one of the claims 6 to 8, **characterized in that** the control unit (5) is designed and arranged to control the drive in a way that the cart is located at predetermined place at a predetermined point in time.

10. The apparatus of one of the claims 5 to 9 or the coating machine of one of the claims 6 to 9, **characterized in that** the cart (20) includes spraying nozzles(26) being designed and arranged to face in a downward direction and spraying nozzles (27) being designed and arranged to face in an upward direction, and **in that** the spraying nozzles (26) facing in a downward direction preferably are connected to the circuit (28) for circulating hot water and the spraying nozzles (27) facing in an upward direction are connected to a fresh water connection.

11. The apparatus of one of the claims 5 to 10 or the coating machine of one of the claims 6 to claim 10, **characterized in that** the spraying nozzles (26, 27) of the cart (20) are arranged in a plurality of rows, each of the rows extending over a working width of the coating machine at different angle of inclination.

12. The apparatus of one of the claims 5 to 11 or the coating machine of one of the claims 6 to claim 11, **characterized in that** the spraying nozzles (26, 27) of the cart (20) are designed and arranged to be supplied with drying air.

## Revendications

1. Procédé pour nettoyer une enrobeuse (1) pour la transformation de chocolat et de masses similaires, dans lequel l'enrobeuse (1) présente une pluralité d'unités à nettoyer (14, 16, 18, 19, 6, 7, etc.), **caractérisé en ce que** de l'eau chaude sous pression, commandée automatiquement, est projetée sur les unités à nettoyer (14, 16, 18, 19, etc.).

2. Procédé selon la revendication 1, **caractérisé en ce que** l'eau chaude sous pression est projetée de façon commandée sur les unités à nettoyer (14, 16, 18, 19 ; 6, 7, etc.) à l'aide d'un chariot (20) pouvant être déplacé en va-et-vient au-dessus d'une bande en treillis (14) de l'enrobeuse (1) et équipé de gicleurs (26 ; 27).

3. Procédé selon la revendication 2, **caractérisé en ce que** le chariot (20) est déplacé à des vitesses localement différentes.

4. Procédé selon l'une quelconque des revendications 1 à 3, **caractérisé en ce que** l'enrobeuse (1) présente un cadre (2), une bande en treillis (14) logée dans celui-ci et pouvant être entraînée en rotation, pour recevoir l'objet à enrober, et une cuvette (12) avec une enveloppe double pouvant être chauffée (13), et l'eau est versée dans la cuvette (12) et conduite à l'aide d'une pompe (35) dans le circuit (28) au-dessus des unités à nettoyer (14, 16, 18, 19, etc.).

5. Dispositif pour nettoyer une enrobeuse (1) pour la transformation de chocolat et de masses similaires, dans lequel l'enrobeuse (1) présente une bande en treillis (14) pouvant être entraînée en rotation pour recevoir l'objet à enrober et au moins une autre unité à nettoyer (16, 18, 19, etc.), dans lequel la bande en treillis (14) définit un plan de bande en treillis (17), en particulier pour exécuter le procédé selon l'une quelconque des revendications 1 à 4, **caractérisé en ce qu'**un chariot (20) équipé de gicleurs (26 ; 27) est prévu qui est guidé au-dessus du plan de bande en treillis (17) et peut être entraîné en va-et-vient de telle sorte que de l'eau chaude sous pression, commandée automatiquement, est projetée sur les unités à nettoyer (14, 16, 18, 19, etc.).

6. Enrobeuse (1) avec possibilité de nettoyage pour la transformation de chocolat et de masses similaires, comprenant
une bande en treillis (14) pouvant être entraînée en rotation pour recevoir l'objet à enrober, dans laquelle la bande en treillis (14) définit un plan de bande en treillis (17), et
un chariot (20) qui présente une pluralité de gicleurs (26 ; 27) et est guidé au-dessus du plan de bande en treillis (17) et peut être entraîné en va-et-vient de telle sorte que de l'eau chaude sous pression, commandée automatiquement, est projetée sur la bande en treillis (14) à nettoyer.

7. Dispositif selon la revendication 5 ou enrobeuse selon la revendication 6, **caractérisé**(**e**) **en ce que** les gicleurs (26 ; 27) du chariot (20) sont raccordés à un circuit (28) comprenant une pompe (35) pour l'eau chaude et/ou un raccordement d'eau fraîche.

8. Dispositif selon la revendication 7 ou enrobeuse selon la revendication 7, **caractérisé(e) en ce que** le chariot (20) est muni d'un entraînement (22) et en ce qu'un dispositif de commande (5) pour le pilotage de l'entraînement (22) du chariot (20) et de la pompe (35) disposée dans le circuit (28) est prévu.

9. Dispositif selon l'une quelconque des revendications précédentes 5 à 8 ou enrobeuse selon l'une quelconque des revendications 6 à 8, **caractérisé(e) en ce que** le dispositif de commande (5) est réalisé de façon commandée en position et temps.

10. Dispositif selon l'une quelconque des revendications précédentes 5 à 9 ou enrobeuse selon l'une quelconque des revendications 6 à 9, **caractérisé(e) en ce que** le chariot (20) présente des gicleurs (26) tournés vers le bas et des gicleurs (27) tournés vers le haut, dans lequel ou laquelle les gicleurs (26) tournés vers le bas sont de préférence raccordés au circuit (28) de l'eau chaude mise en circulation et les gicleurs (27) tournés vers le haut sont raccordés à l'eau fraîche.

11. Dispositif selon l'une quelconque des revendications précédentes 5 à 10 ou enrobeuse selon l'une quelconque des revendications 6 à 10, **caractérisé(e) en ce que** les gicleurs (26, 27) sur le chariot (20) sont disposés sous une inclinaison différente dans plusieurs rangées de gicleurs recouvrant la largeur de passage.

12. Dispositif selon l'une quelconque des revendications précédentes 5 à 11 ou enrobeuse selon l'une quelconque des revendications 6 à 11, **caractérisé(e) en ce que** les gicleurs (26, 27) du chariot (20) sont réalisés de façon à pouvoir être raccordés à l'air de séchage.
